# FASCICULE DE BREVET EUROPEEN

(11) **EP 2 374 385 B1**
(45) Date de publication et mention de la délivrance du brevet: **22.05.2013**
(21) Numéro de dépôt: 11153436.8
(22) Date de dépôt: 04.02.2011
(51) Int. Cl.: A47J 37/06, F24C 1/14, F24C 7/04

(54) **Appareil de cuisson à infrarouge**
Infrarot-Kochgerät
Infrared cooking appliance

(30) Priorité: 04.02.2010 FR 1050792
(43) Date de publication de la demande: 12.10.2011
(73) Titulaire: Meledo, M. Hervé, 44240 Suce sur Erdre (FR)
(72) Inventeur: Meledo, M. Hervé, 44240 Suce sur Erdre (FR)
(74) Mandataire: Delorme, Nicolas

(56) Documents cités:
- EP-A1- 1 586 820
- EP-A2- 1 431 670
- EP-A2- 1 795 812
- WO-A1-2008/032901
- DE-U1- 8 509 277
- FR-A1- 2 827 146
- US-A- 3 313 917
- US-A- 3 485 229
- US-A- 3 828 760

## Description

La présente invention se rapporte à un appareil de cuisson à infrarouge.

On connait, par exemple par les documents FR 2 827 146, etUS 3313917 des appareils de cuisson dont le chauffage est réalisé par rayonnement infrarouge.

Le principe de ce type de cuisson consiste à cuire des aliments grâce au rayonnement infrarouge maitrisé et à la vapeur; le rayonnement infrarouge permet de cuire les aliments à une température inférieure à 95°C. Cette cuisson à basse température ne dégrade pas les aliments.

Un appareil qui permet de réaliser une cuisson par rayonnement infra rouge comprend une structure métallique qui supporte une ou deux cassette d'émission de rayonnement infrarouge au dessus de laquelle est placé un récipient en verre perméable au rayonnement infrarouge et dans lequel se développe de la vapeur. Chaque cassette d'émission de rayonnement infrarouge possède plusieurs tubes qui émettent un rayonnement compris entre 6 et 14 µm.

La présence d'une cassette d'émission de rayonnement infrarouge dégage une chaleur importante qui, au niveau de la structure même de l'appareil, peut poser des problèmes. Ce type d'appareil est généralement pourvu de surfaces réfléchissantes qui dirigent le flux vers le centre de l'appareil où se trouve un récipient en verre. Néanmoins, il se produit inévitablement un échauffement des parois extérieures de l'appareil qui n'est pas souhaitable pour l'utilisateur de l'appareil et son environnement.

On peut préciser que la problématique majeure d'un appareil de cuisson est le refroidissement de son enveloppe extérieure au moindre cout et dans un encombrement compact.

En outre, les appareils actuels sont complexes à fabriquer, ce qui a tendance à renchérir leur coût et à en limiter la diffusion.

La présente invention a pour objet de remédier en tout ou partie aux différents inconvénients cités précédemment.

Dans ce contexte technique, un but de la présente invention est notamment de fournir un appareil de cuisson à infrarouge permettant une meilleure gestion de la chaleur dégagée par les éléments rayonnants tout en présentant une structure simple à fabriquer ainsi qu'à isoler et tout en demeurant compact.

A cet effet, la présente invention se rapporte à un appareil de cuisson
- une partie inférieure comprenant une cassette de cuisson ayant au moins un élément rayonnant inséré dans une enveloppe inférieure ;
- une partie supérieure comprenant une cassette de cuisson ayant au moins un élément rayonnant inséré dans une enveloppe supérieure ;
- une partie postérieure assurant le maintien parallèle et à distance de la partie inférieure et de la partie supérieure pour délimiter un espace de cuisson vers lequel sont dirigées les cassettes de cuisson inférieure et supérieure ;
- une partie arrière supportant deux cassettes de cuisson superposées supérieure et inférieure qui présentent chacune au moins un élément rayonnant infrarouge et qui délimitent un espace de cuisson vers lequel les rayonnements des éléments rayonnants sont dirigés, et des capots arrière, supérieure et inférieure recouvrant respectivement la paroi arrière, la cassette de cuisson supérieure et la cassette de cuisson inférieure et délimitant respectivement des espaces arrière, supérieur et inférieur,

De plus, l'appareil de cuisson comprend :
- au moins un ventilateur soufflant un flux d'air dans les parties postérieure, supérieure et inférieure, et
- deux ferrures de délimitation séparant le flux d'air entrant en deux flux centraux supérieur et inférieur s'écoulant dans deux canaux centraux supérieur et inférieur et deux flux latéraux supérieurs et inférieurs s'écoulant respectivement dans deux canaux latéraux supérieur et inférieur dans lesquels l'air s'écoule à une plus grande vitesse que dans les canaux centraux assurant l'extraction de la chaleur par des ouvertures placées à l'extrémité latérale avant des parties supérieures et inférieures chaque ferrure présentant une forme générale de C ayant une aile verticale supportant la paroi arrière et deux branches horizontales superposées supportant respectivement les cassettes supérieure et inférieure réalisant une enveloppe d'air statique.

Ainsi, l'appareil de cuisson selon la présente invention permet d'évacuer la chaleur provoquée par la présence des cassettes de cuisson de façon efficace grâce au différentiel de vitesse et de température des flux centraux et latéraux. Les canaux latéraux se comportent à la manière d'une tuyère et contribuent, par le différentiel de vitesse entre les flux centraux et latéraux, à l'extraction des flux centraux supérieur et inférieur. L'appareil de cuisson selon l'invention est, par ailleurs, simple à réaliser et les coûts de fabrication et d'isolation thermique restent modérés par rapport à un appareil de cuisson selon l'art antérieur. L'appareil de cuisson selon la présente invention permet également de maintenir les éléments de surface de l'appareil de cuisson à une température acceptable durant son fonctionnement et ce par une gestion aéraulique de l'évacuation de la chaleur. Une température acceptable des éléments constitutifs de l'appareil de cuisson durant son fonctionnement peuvent également diminuer les risques de brûlures pour l'utilisateur.

Dans une forme d'exécution préférée de l'invention, l'appareil de cuisson comprend deux réflecteurs qui obturent au moins partiellement chacunes des faces latérales de l'espace de cuisson. Cette disposition présente des conséquences très positives sur le fonctionnement de l'appareil car elle permet de limiter la consommation d'énergie de l'appareil en évitant les déperditions énergétiques et elle permet d'homogénéiser la cuisson. En l'absence de ces réflecteurs, la cuisson latérale est moindre que la cuisson centrale dans le récipeint de cuisson.

Selon un mode de réalisation préférée de l'invention, l'appareil de cuisson comprend une carcasse en forme générale de C comprenant une paroi arrière et deux platines supérieure et inférieure. La carcasse ainsi définie peut par exemple être fabriquée à partir d'une tôle pliée.

De plus, la platine supérieure peut présenter deux rabats latéraux et la platine inférieure peut présenter deux rabats latéraux, ce qui a l'avantage de rigidifier la carcasse et, par conséquent, l'appareil lui-même mais permet également de créer une paroi pour, par exemple, guider des faisceaux de câbles qui alimentent les cassettes de cuisson. Cette disposition permet également de protéger mécaniquement ces câbles vis-à-vis par exemple d'une intrusion venant des ouvertures. On peut également noter que ces rabats délimitent une lame d'air statique qui est adjacante à la cassette de cuisson. En d'autres termes, cette disposition permet de créer un double degré d'isolation avec une lame d'air statique directement adjacente à la cassette de cuisson et un flux d'air dynamique notamment latérale.

II peut être prévu que chacune des cassettes de cuisson soit encapsulée par une tôle d'isolation, ce qui permet de créer une enveloppe statique autour des tubes chauffants qui forment les cassettes de cuisson.

La platine supérieure et la platine inférieure de la carcasse présentent chacune un évidement dans lequel est insérée une cassette de cuisson. La cassette de cuisson supérieure peut être protégée par une grille de protection et la cassette inférieure peut être protégée par un plaque vitrocéramique.

Dans une forme de réalisation préférentielle, chaque ferrure présente une forme générale de C ayant une aile verticale qui vient en appui contre la paroi arrière et deux branches horizontales superposées qui viennent en appui contre les platines supérieure et inférieure. L'ossature du four est ainsi complétée par deux ferrures qui peuvent être obtenues par des procédés de découpe (laser ou autre) ou d'injection peu coûteux et bien adaptés à la fabrication en série. Ces deux ferrures avec la carcasse sont ainsi la base de l'appareil selon l'invention.

De manière concrète, l'appareil peut comprendre deux ventilateurs disposés en regard de l'aile verticale de chacune des ferrures. Cela permet de générer trois flux d'air distincts à savoir :
- le flux d'air central dont l'écoulement est relativemement statique et qui crée une lame d'air au niveau de la face supérieure de la cassette de cuisson supérieure et au niveau de la face inférieure de la cassette de cuisson inférieure
- deux flux d'air latéraux qui encadrent le flux central ; les deux flux latéraux présentent un écoulement dynamique de sorte à maintenir les faces latérales de l'appareil à une température acceptable. Les flux latéraux assurent l'extraction des flux centraux tout en les refroidissant avant qu'ils ne sortent de l'appareil de cuisson. Cela permet de plus de créer de plus une isolation dynamique du four.

Cette disposition permet de disposer de deux ventilateurs de petite taille.

Selon une forme de réalisation de l'invention, l'aile verticale d'au moins ferrure présente une double inflexion de sorte que les canaux latéraux supérieurs présentent une section inégale à celle des canaux latéraux inférieurs. Cette dispostion permet, d'une part, de conférer une plus grande rigidité à la ferrure et permet également de créer des canaux latéraux de sections inégales dans leurs composantes supérieure et inférieure. Cette disposition permet également de répartir au mieux les flux d'air en jouant sur les pertes de charge.

Dans une forme de réalisation préférée, la cassette de cuisson inférieure présente une surface qui dépasse celle de la cassette supérieure. Cette disposition permet une cuisson plus homogène en optimisant les surfaces de rayonnement. Les cocottes qui sont destinées à être placées dans le four ont des formes sensiblement trapézoidale. Cette disposition permet donc d'adapter la surface de rayonnement à la forme des cocottes qui sont évasées vers le bas où se trouve donc la surface de rayonnement la plus importante.

II est également envisagé que l'appareil présente deux joues latérales en forme de C possédant à leurs deux extrémités latérales des ouvertures par lesquelles est extrait le flux de refroissement. Les joues agissent en synergie avec les ferrures pour conférer à l'appareil sa rigidité. Ce point est d'importance car la cassette de cuisson supérieure est en porte à faux ; les ferrures et les joues qui peuvent être de simples tôles découpées confèrent par leurs actions conjuguées la rigidité nécessaire.

Pour sa bonne compréhension, l'invention est maintenant décrite en référence au dessin ci-annexé représentant à titre d'exemple non limitatif une forme de réalisation de celle-ci.
La Figure 1 représente une vue avant en perspective d'un appareil de cuisson selon la présente invention ;
la Figure 2 représente une vue arrière d'un appareil de cuisson selon la présente invention ;
la Figure 3 représente une vue en coupe et en perspective d'un appareil de cuisson selon la présente invention ;
la Figure 4 est une vue en perspective d'un appareil de cuisson faisant apparaître la circulation de l'air dans les différentes parties de l'appareil lorsque les moyens de mise en circulation fonctionnent ;
la Figure 5 est une vue en perspective d'un composant de l'appareil selon l'invention ;
les figures 6 et 8 montrent à une échelle agrandie les flux de circulation d'air dans les parties inférieure et supérieure de l'appareil.
la Figure 7 est une vue en perspective d'une carcasse de l'appareil de cuisson ;
la Figure 8 est une vue schématique en coupe des flux d'air à l'intérieur de l'appareil.

Dans la présente description des figures, les parois sont représentées comme étant transparentes pour faciliter la compréhension de l'invention.

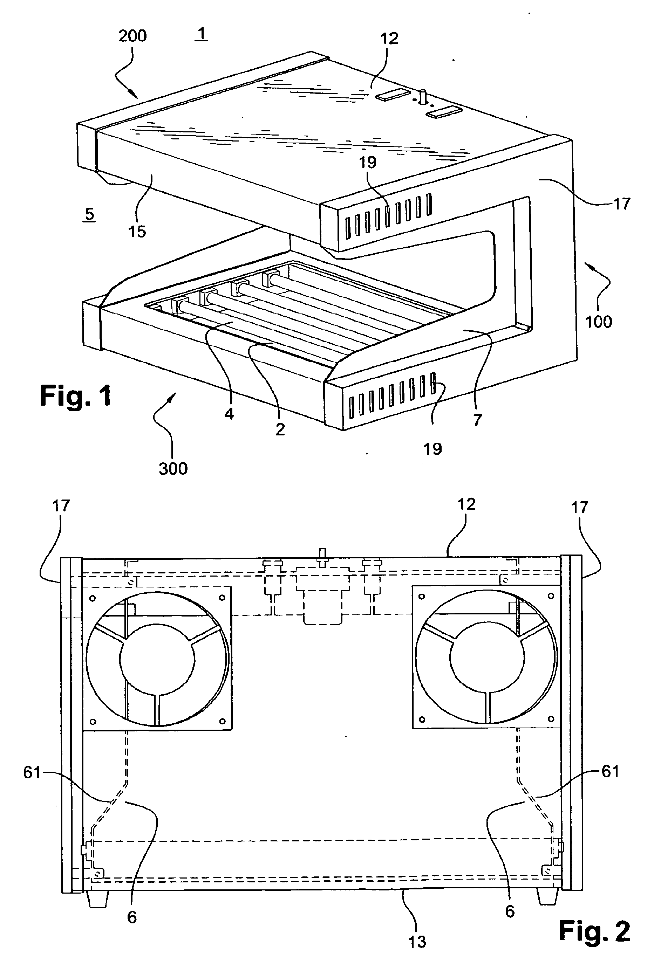

L'appareil de cuisson 1 de la figure 1 selon l'invention présente une forme générale en C avec une partie arrière 100 et deux parties horizontales superposées supérieure 200 et inférieure 300 délimitant un espace vide. C'est dans cet espace que se glisse un récipient de verre dans lequel se forme de la vapeur qui assure la cuisson d'aliments à moins de 100°C. L'appareil de cuisson 1 s'inscrit dans un parallélépipède ouvert sur trois faces.

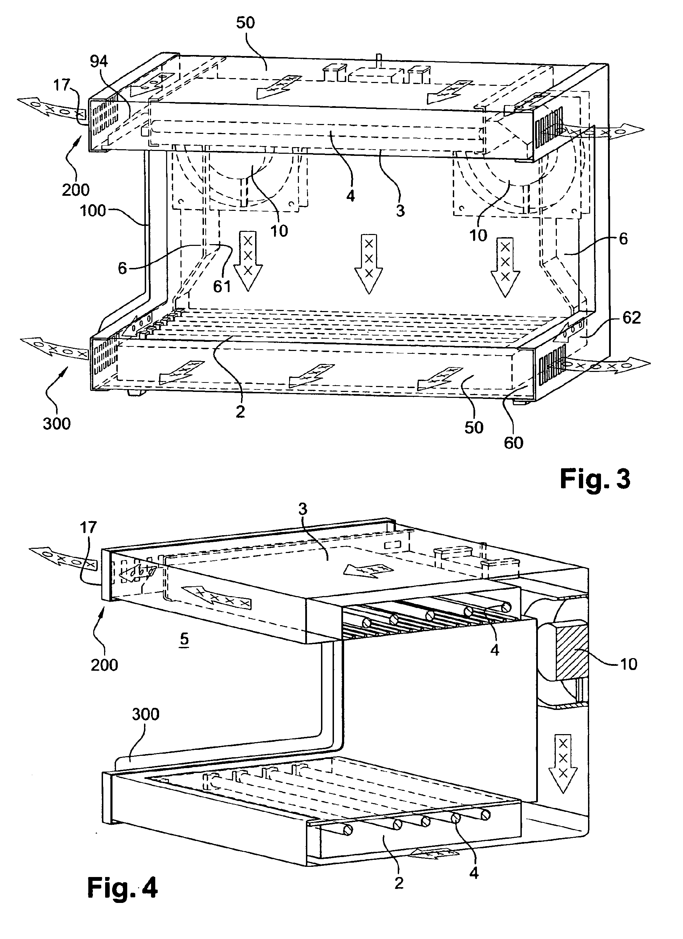

L'appareil de cuisson 1 selon l'invention, tel que représenté par exemple aux Figure 3 et 4, comporte deux cassettes de cuisson 2, 3 disposées en regard l'une de l'autre.

Chaque cassette de cuisson 2, 3 possède une pluralité d'éléments rayonnants infrarouge 4 qui émettent un rayonnement infrarouge dirigé vers un espace de cuisson 5 défini entre les cassettes de cuisson 2,3. Les éléments rayonnants infrarouge 4 sont protégés de préférence par une vitre de type vitrocéramique en partie inférieure ou par une grille métallique en partie supérieure.

L'espace de cuisson 5 est délimitée latéralement par deux réflecteurs 7 comme on peut le voir à figure 1 qui obturent au moins partiellement les faces latérales

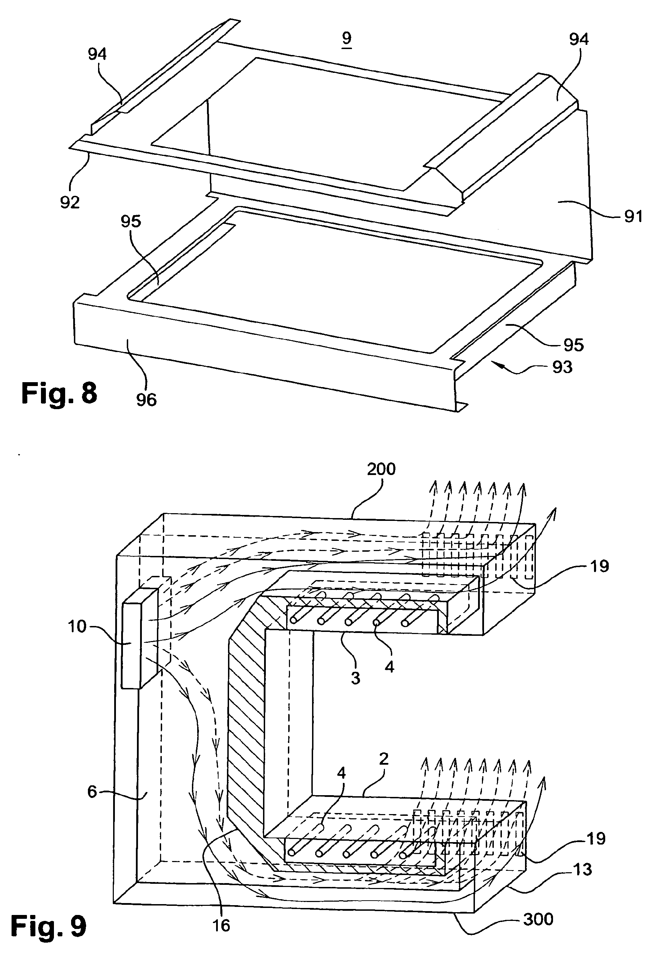

L'appareil de cuisson comprend une carcasse 9 en forme générale de C. Cette carcasse 9 peut être, comme montré sur la figure 8, réalisée par pliage à partir d'une unique pièce de tôle qui est donc d'un cout de fabrication et de montage réduit.

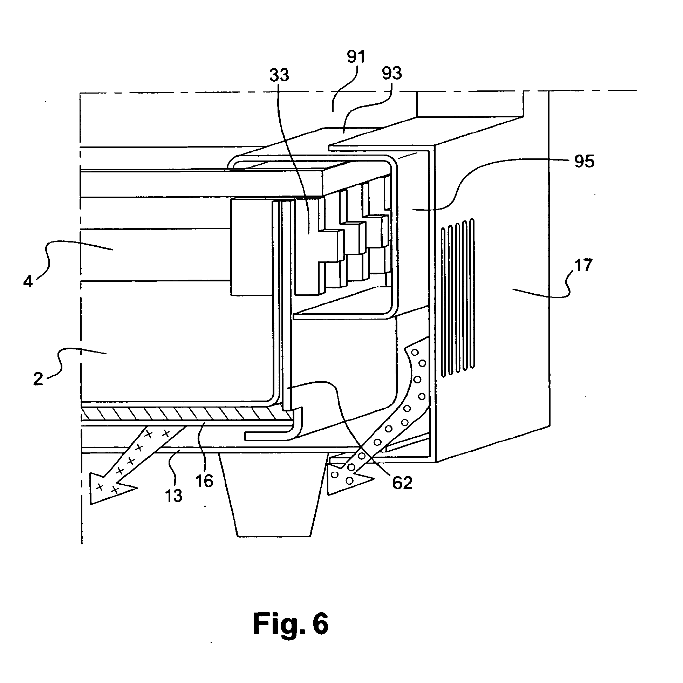

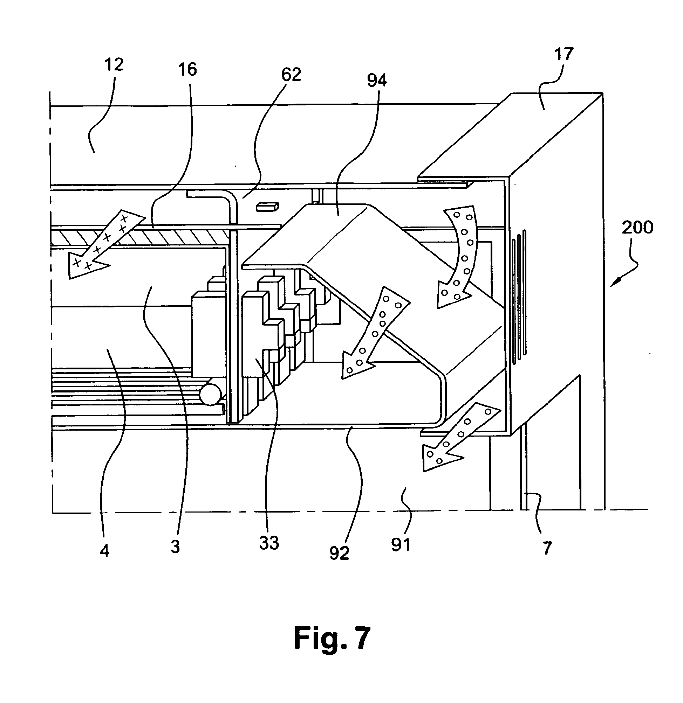

En pratique, la carcasse 9 qui délimite l'espace de cuisson peut comprendre une paroi de fond 91 et deux platines supérieure 92 et inférieure 93. La platine supérieure 92 (cf. figure 7) est pourvue de deux rabats latéraux 94 ; de façon analogue, la platine inférieure 93 (cf. figure 6) qui est également pourvue de deux rabats latéraux 95. La platine inférieure 93 possède de plus un rabat frontal 96.

On note que chacune des platines supérieure 92 et inférieure 93 présente un évidement dans lequel viennent s'insérer respectivement une cassette de cuisson supérieure 3 et une cassette de cuisson inférieure 2. Chaque cassette de cuisson 2 et 3 est encapsulée dans une tôle d'isolation verticalement et horizontalement ; cette encapsulation est également effective latéralement grâce d'une part aux ferrures 6 et d'autre part aux rabats 94 de la platine supérieure 92 et aux rabats 95 de la platine inférieure 93. Ainsi, chaque cassette de cuisson 2 et 3 et plus particulièrement les éléments rayonnants infrarouge 4 qui composent les cassettes de cuisson 2 et 3, est entourée d'une enveloppe d'air statique qui est représentée par convention avec des hachures sur la figure 6, 7 et 9. II est à noter que cette enveloppe d'air s'étend également sur les faces latérales des cassettes de cuisson.

L'appareil de cuisson comprend en outre deux ferrures 6, par exemple, de tôle métallique en forme générale de C qui, dans le cas présent, sont identiques.

Chacune de ces ferrures 6 présente une aile verticale 61 et deux branches horizontales 62. Comme cela est représenté sur les figures 2,3 ou 5, l'aile verticale 61 peut présenter une double inflexion pour, notamment, en améliorer la rigidité. Cette double inflexion a également pour fonction de permettre la réception d'une cassette de cuisson supérieure 3 de dimensions différentes de celles de la cassette de cuisson inférieure 2.

Comme on peut le voir sur les figures, les deux ferrures 6 forment, avec la carcasse 9, l'ossature de l'appareil de cuisson 1 et, comme on va le voir, elles assurent également un rôle essentiel dans l'isolation et le refroidissement de l'appareil de cuisson.

En effet, les composants principaux de l'appareil de cuisson c'est à dire les deux cassettes de cuisson 2 et 3 et la tôle d'isolation et les différentes parois viennent se fixer sur les deux ferrures 6 qui sont elles-mêmes renforcées par les joues latérales ; La carcasse 9 est engagée dans les ferrures pour former et délimiter l'espace de cuisson. La carcasse 9 complète l'encapsulation des cassettes de cuisson notamment au niveau des bords latéraux en céramique des cassettes de cuisson (les éléments infrarouges 4 ont en effet des terminaisons en céramiques)

Deux ventilateurs 10 sont disposés dans la partie arrière 100 ; il est prévu de préférence deux ventilateurs 10 de façon à positionner chacun d'eux en regard d'une aile verticale d'une ferrure ce qui permet comme on le verra plus loin de diviser le flux qui est soufflé à l'intérieur de l'appareil.

Au niveau des prolongements supérieur et inférieur de la carcasse 9, viennent se fixer un capot supérieur 12 et un capot inférieur 13.

II est à noter que le capot supérieur 12 peut être doté d'un retour qui, en façade de l'appareil de cuisson 1, ferme la partie supérieure 200. Ce retour peut être intégré, par exemple, par pliage au capot supérieur 12.

En partie inférieure 300, la carcasse 9 peut elle-même incoporer un retour qui assure l'obturation de la face avant.

De plus, l'appareil de cuisson 1 possède deux joues 17 en forme de C qui viennent obturer latéralement l'appareil comme on peut le voir aux figures 1, 3 ou 5. Les joues 17 participent également à la rigidité générale de l'appareil. Comme cela est représenté sur les figures, chacune des joues 17 est pourvue d'ouvertures permettant un passage d'air ; les ouvertures 19 sont disposées au niveau des extrémités latérales avent des joues 17.

L'appareil de cuisson 1 est également pourvu d'une alimentation électrique et d'un pupitre de commande par lequel l'utilisateur peut agir sur une minuterie contrôlant la durée d'action des cassettes de cuisson. Le pupitre de commande peut être positionné notamment au niveau du retour supérieur 15 ou à l'arrière de la partie supérieure 200.

Une des originalités de l'appareil de cuisson 1 selon l'invention tient au fait que les ferrures 6 ont un rôle important qui s'exprime tant au niveau de la structure que lors de l'assemblage du four mais jouent également une fonction essentielle dans la gestion du refroidissement de l'appareil.

En effet, chacune des deux ferrures 6 par ses ailes et ses montants verticaux respectifs permet de segmenter l'espace intérieur des parties arrière 100, supérieure 200 et inférieure 300.

De façon concrète, les deux ferrures 6 permettent de créer un canal central 50 encadré de deux canaux latéraux 60. Le canal central 50 présente une composante supérieure qui est délimitée par le capot supérieur 12 et la tôle d'isolation 16 qui encapsule la cassette de cuisson supérieure et une composante inférieure qui est délimité par le capot inférieur 13 et la tôle d'isolation 16 qui encapsule la cassette de cuisson inférieure. Il en est de même pour les canaux latéraux 60 qui présentent chacun deux composantes supérieures et deux composantes inférieures. En d'autres termes, il y a continuité de chacun des canaux centraux 50 et latéraux 60 dans les parties arrière 100, supérieure 200 et inférieure 300.

On peut noter que les canaux latéraux 60 inférieurs (cf. figure 6) présentent une section différente que celle des canaux latéraux 60 supérieurs (cf. figure 7) en raison du profil à double inflexion de l'aile arrière des ferrures 6.

En fonctionnement, l'appareil de cuisson se comporte de la manière suivante :
Un récipient en verre est placé dans l'espace de cuisson 5 délimité par la carcasse 9 et ses réflecteurs 7 ainsi que par les cassettes de cuisson 2 et 3 qui sont mises en action.

Via les ventilateurs 10, l'air ambiant est pulsé dans l'appareil de cuisson.

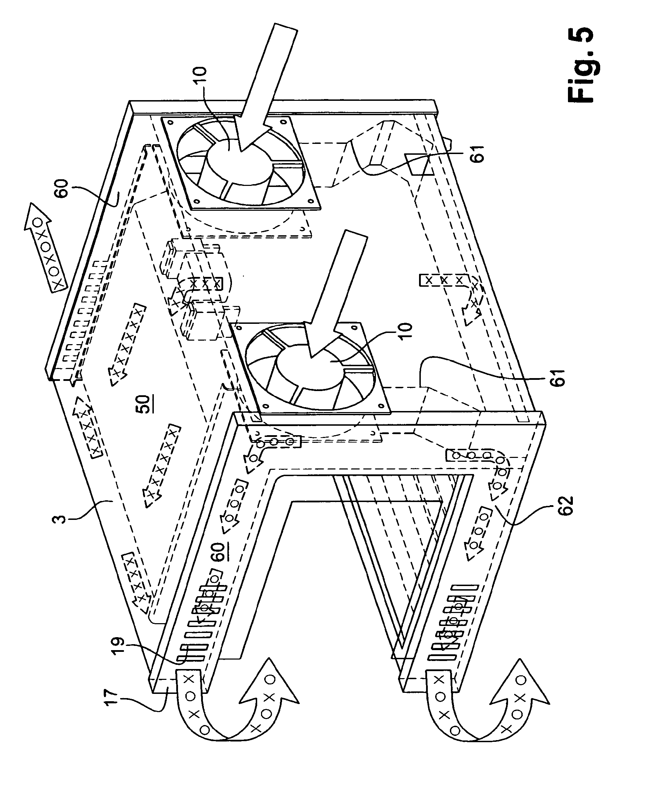

Le flux d'air est alors séparé en deux flux centraux supérieur et inférieur qui s'écoulent dans les canaux centraux 50 supérieur et inférieur et en quatre flux latéraux supérieurs et inférieurs s'écoulant respectivement dans les canaux latéraux 60 supérieurs et inférieurs ; l'air s'écoule à une plus grande vitesse dans les canaux latéraux 60 en raison d'une moindre perte de charge que celle qui se produit dans les conduits centraux comme cela apparait aux figures 5,6 ou 7. L'air frais qui est pulsé directement par les ventilateurs 10 dans les canaux latéraux 60 aspire et extrait l'air chaud qui a longé la partie centrale - la plus chaude - et qui se trouve dans les canaux centraux 50 comme cela est montré à la figure 5. Par convention, les flèches symbolisant le flux dans les canaux centraux sont représentées avec des croix tandis que les flèches symbolisant le flux dans les canaux latéraux sont représentées avec des ronds dans manière à bien les distinguer.

Les flux d'air centraux et latéraux supérieur et inférieur se réunissent au niveau du retour frontal des capots respectivement inférieur 96 et supérieur 15.

Les canaux latéraux 60 se comportent à la manière d'une tuyère et contribuent par le différentiel de vitesse entre les flux centraux 50 et latéraux 60, à l'extraction des flux centraux 50 supérieur et inférieur vers les ouvertures 19 ménagées dans les joues latérales. On peut se reporter aux figures 7 et 8 pour mieux apprécier ce phénomène.

En pratique, l'appareil selon l'invention permet de combiner une isolation à la fois statique et dynamique.

Chacune des deux cassettes de cuisson 2 et 3 est encapsulée (voir figures 5, 6, 7,9) longitudinalement par une tôle d'isolation 16 et latéralement par les ferrures 6 et par les rabats latéraux 94 et 95 de la carcasse 9 ce qui crée une enveloppe statique qui préserve l'énergie nécessaire à la cuisson comme cela apparait à la figure 9.

En revanche, le flux d'air dynamique qui circule permet d'extraire des calories de l'appareil de cuisson qui ont passé le barrage de l'isolation statique et, in fine, permet de maintenir les surfaces extérieures de l'appareil à une température acceptable pour l'utilisateur. De manière remarquable, les flux latéraux ont un effet de refroidissement sur les flux centraux avant l'évacuation par les ouvertures latérales.

On peut noter que les flux d'air latéraux qui ne sont pas en contact direct avec les cassettes de cuisson (ces dernières par ailleurs moins chaudes latéralement du fait de la présence d'embouts céramique des éléments chauffants sont isolées par les volumineux rabats latéraux 94 et 95 de la carcasse 9 et par les ferrures 6) sont de ce fait à une température sensiblement inférieure à la température des flux d'air centraux qui glissent contre les tôles isolantes centrales (les plus chaudes) des cassettes de cuisson. Les ferrures 6 et les rabats latéraux 94 et 95 comme le montrent les figures 6 et 7 permettent une meilleure gestion du refroidissement ce qui peut permettre d'utiliser des matériaux de moindre épaisseur et/ou des ventilateurs de moindre débit par la division du flux de refroidissement.

La carcasse, les joues latérales et les ferrures 6 permettent de réaliser la structure d'un appareil de cuisson à infra rouge de manière simple et robuste. L'invention permet de réaliser un appareil de cuisson qui tout en restant compact présente des surfaces extérieures qui restent à une température basse. On peut noter de plus que l'isolation est réalisée principalement par une dynamique de flux d'air sans avoir recours à des matières isolantes volumineuses et couteuses. A ce sujet, il doit être rappelé que la principale contrainte en matière d'appareil de cuisson est de maintenir l'enveloppe extérieure à basse température. L'invention permet donc de fournir un appareil de cuisson dont le gradient de température passe de 200 C au niveau des éléments chauffants) environ 30/40 C au niveau de l'enveloppe extérieur qui est distante des éléments chauffants de 20 à 30 mm.

Bien entendu les exemples de réalisations évoqués ci-dessus ne présentent aucun caractère limitatif et d'autres détails et améliorations peuvent être apportés à l'appareil de cuisson selon l'invention, sans pour autant sortir du cadre de l'invention où d'autres formes de l'appareil de cuisson peuvent être réalisées.

## Revendications

1. Appareil de cuisson (1) présentant
- une partie inférieure (300) comprenant une cassette de cuisson (2) ayant au moins un élément rayonnant insérer dans une enveloppe inférieure ;
- une partie supérieure (200) comprenant une cassette de cuisson (3) ayant au moins un élément rayonnant insérer dans une enveloppe supérieure ;
- une partie postérieure (100) assurant le maintien parallèle et à distance de la partie inférieure et de la partie supérieure pour délimiter un espace de cuisson (5) vers lequel sont dirigées les cassettes de cuisson inférieure et supérieure ;
- une partie arrière supportant deux cassettes de cuisson superposées supérieure (3) et inférieure (2) qui présentent chacune au moins un élément rayonnant infrarouge (4) et qui délimitent un espace de cuisson (5) vers lequel les rayonnements des éléments rayonnants (4) sont dirigés, et des capots arrière, supérieur (12) et inférieur (13) recouvrant respectivement la paroi arrière, la cassette de cuisson supérieure (3) et la cassette de cuisson inférieure (2) et délimitant respectivement des espaces arrière, supérieur et inférieur,
**caractérisé en ce que** l'appareil de cuisson comprend
- au moins un ventilateur (10) soufflant un flux d'air dans les parties postérieure, supérieure et inférieure, et
- deux ferrures (6) de délimitation séparant le flux d'air en deux flux centraux supérieur et inférieur s'écoulant dans deux canaux centraux (50) supérieur et inférieur et deux flux latéraux supérieurs et inférieurs s'écoulant respectivement dans deux canaux latéraux (60) supérieur et inférieur dans lesquels l'air s'écoule à une plus grande vitesse que dans les canaux centraux assurant l'extraction de la chaleur par des ouvertures placées à l'avant des parties supérieures et inférieures, chaque ferrure (6) présentant une forme générale de C ayant une aile verticale supportant la paroi arrière et deux branches horizontales superposées supportant respectivement les cassettes supérieure et inférieure réalisant une enveloppe d'air statique.

2. Appareil de cuisson (1) selon la revendication 1, **caractérisé en ce que** l'appareil comprend deux ventilateurs (10) disposés en regard de l'aile verticale (61) de chacune des ferrures (6).

3. Appareil de cuisson (1) selon le revendication 1 ou la revendication 2, **caractérisé en ce que** l'aile verticale (61) d'au moins une paroi de séparation présente une double inflexion de sorte que les canaux latéraux supérieurs et la cassette de cuisson supérieure présentent une section différente de celle des canaux latéraux inférieurs et de la cassette de cuisson inférieure.

4. Appareil de cuisson selon l'une des revendications 1 à 3, **caractérisé en ce qu'**il comprend deux réflecteurs (7) qui obturent au moins partiellement chacunes des faces latérales de l'espace de cuisson (5).

5. Appareil de cuisson selon la revendication 1 ou la revendication 2, **caractérisé en ce qu'**il comprend une carcasse (9) délimitant un espace de cuisson en forme générale de C comprenant une paroi arrière et deux platines supérieure (92) et inférieure (93).

6. Appareil de cuisson selon la revendication 3, **caractérisé en ce que** la platine supérieure (92) présente deux rabats latéraux (94) et **en ce que** la platine inférieure (93) présente deux rabat latéraux (95).

7. Appareil de cuisson selon l'une des revendications 1 à 4, **caractérisé en ce que** chacune des cassettes de cuisson est encapsulée par une tôle d'isolation (16).

8. Appareil selon l'une des revendications 5 à 7, **caractérisé en ce que** la platine supérieure (92) et la platine inférieure (93) présentent chacune un évidement dans lequel est insérée une cassette de cuisson.

9. Appareil de cuisson selon l'une des revendications 1 à 8, **caractérisé en ce que** la cassette de cuisson inférieure presente une surface qui dépasse celle de la cassette supérieure.

10. Appareil de cuisson (1) selon l'une des revendications 1 à 9, **caractérisé en ce que** l'appareil présente deux joues latérales (17) en forme de C possédant à leurs deux extrémités libres des ouvertures (19) par lesquelles est extrait le flux de refroissement.

## Patentansprüche

1. Gargerät (1), aufweisend
- einen unteren Abschnitt (300), der eine Garkassette (2) umfasst, die mindestens ein in einer unteren Hülle eingesetztes strahlendes Element hat,
- einen oberen Abschnitt (200), der eine Garkassette (3) umfasst, die mindestens ein in einer oberen Hülle eingesetztes strahlendes Element hat,
- einen posterioren Abschnitt (100), der den parallelen und beabstandeten Halt des unteren Abschnitts und des oberen Abschnitts sichert, um einen Garraum (5) zu begrenzen, zu dem die untere und obere Garkassette zeigt,
- einen hinteren Abschnitt, der zwei übereinanderstehende Garkassetten, die obere (3) und die untere (2), trägt, die jeweils mindestens ein strahlendes Infrarot-Element (4) aufweisen und die einen Garraum (5) begrenzen, zu dem die Strahlungen der strahlenden Elemente (4) gerichtet sind, und Abdeckungen, eine hintere, obere (12) und untere (13), die jeweils die hintere Wand, die obere Garkassette (3) und die untere Garkassette (2) bedecken und jeweils einen hinteren, oberen und unteren Raum begrenzen,
**dadurch gekennzeichnet, dass** das Gargerät umfasst
- mindestens einen Lüfter (10), der einen Luftstrom in den posterioren, oberen und unteren Abschnitt bläst, und
- zwei Begrenzungsbeschläge (6), die den Luftstrom in zwei zentrale Ströme, einen oberen und unteren, teilen, die in zwei zentrale Kanäle (50), einen oberen und unteren, strömen, und zwei obere und untere seitliche Ströme, die in jeweils zwei seitliche Kanäle (60), einen oberen und unteren, strömen, in denen die Luft mit höherer Geschwindigkeit als in den zentralen Kanälen strömt, wobei der Abzug der Wärme durch Öffnungen sichergestellt ist, die vor den oberen und unteren Abschnitten platziert sind, wobei jeder Beschlag (6) eine allgemeine C-Form aufweist mit einem vertikalen Flügel, der die hintere Wand stützt und zwei übereinanderstehenden horizontalen Schenkeln, die jeweils die obere und untere Kassette stützen, wobei eine Hülle statischer Luft gebildet wird.

2. Gargerät (1) nach Anspruch 1, **dadurch gekennzeichnet, dass** das Gerät zwei Lüfter (10) umfasst, die gegenüber dem vertikalen Flügel (61) jedes Beschlags (6) angeordnet sind.

3. Gargerät (1) nach Anspruch 1 oder Anspruch 2, **dadurch gekennzeichnet, dass** der vertikale Flügle (61) mindestens einer Trennwand eine doppelte Biegung aufweist, so dass die oberen seitlichen Kanäle und die obere Garkassette einen Querschnitt aufweisen, der sich von dem der unteren seitlichen Kanäle und der unteren Garkassette unterscheidet.

4. Gargerät nach einem der Ansprüche 1 bis 3, **dadurch gekennzeichnet, dass** es zwei Reflektoren (7) umfasst, die jede der Seitenflächen des Garraums (5) mindestens teilweise verschließen.

5. Gargerät nach Anspruch 1 oder Anspruch 2, **dadurch gekennzeichnet, dass** es ein Gehäuse (9) umfasst, das einen allgemein C-förmigen Garraum begrenzt, das eine Rückwand und zwei Platten, eine obere (92) und untere (93), umfasst.

6. Gargerät nach Anspruch 3, **dadurch gekennzeichnet, dass** die obere Platte (92) zwei seitliche Klappen (94) aufweist und dass die untere Platte (93) zwei seitliche Klappen (95) aufweist.

7. Gargerät nach einem der Ansprüche 1 bis 4, **dadurch gekennzeichnet, dass** jede der Garkassetten durch ein Isolationsblech (16) eingekapselt ist.

8. Gargerät nach einem der Ansprüche 5 bis 7, **dadurch gekennzeichnet, dass** die obere Platte (92) und die untere Platte (93) jeweils eine Aussparung aufweisen, in die eine Garkassette eingesetzt ist.

9. Gargerät nach einem der Ansprüche 1 bis 8, **dadurch gekennzeichnet, dass** die untere Garkassette eine Fläche aufweist, die die der oberen Kassette überschreitet.

10. Gargerät (1) nach einem der Ansprüche 1 bis 9, **dadurch gekennzeichnet, dass** das Gerät zwei seitliche Wangen (17) in C-Form aufweist, die an ihren zwei freien Enden Öffnungen (19) besitzen, durch die der Kühlstrom abgeleitet wird.

## Claims

1. A cooking appliance (1) having
- a lower portion (300) comprising a cooking cartridge (2) having a least one radiant element inserted into a lower enclosure;
- an upper portion (200) comprising a cooking cartridge (3) having at least one radiant element inserted into an upper enclosure;
- a rear portion (100) ensuring that the lower portion and the upper portion are kept parallel and separated to define a cooking space (5) toward which the lower and upper cooking cartridges are conveyed;
- a rear portion supporting two upper (3) and lower (2) superimposed cooking cartridges that each have at least one infrared radiant element (4) and that define a cooking space (5) toward which the rays of the radiant elements (4) are oriented, and rear, upper (12) and lower (13) covers respectively covering the rear wall, the upper cooking cartridge (3) and the lower cooking cartridge (2) and respectively defining rear, upper and lower spaces,
**characterized in that** the cooking appliance comprises
- at least one fan (10) blowing a flow of air into the rear, upper and lower portions, and
- delimiting fittings (6) separating the flow of air into two upper and lower central flows flowing in two upper and lower central channels (50) and two upper and lower lateral flows respectively flowing in two upper and lower lateral channels (60) in which the air flows at a higher speed than in the central channels ensuring the removal of the heat through openings placed in front of the upper and lower portions, each fitting (6) being generally C-shaped with a vertical wing supporting the rear wall and two superimposed horizontal branches respectively supporting the upper and lower cartridges forming a static air enclosure.

2. The cooking appliance (1) according to claim 1, **characterized in that** the appliance comprises two fans (10) positioned across from the vertical wing (61) of each of the fittings (6).

3. The cooking appliance (1) according to claim 1 or claim 2, **characterized in that** the vertical wing (61) of at least one separating wall has a double inflection such that the upper lateral channels and the upper cooking cartridge have a different cross-section from that of the lower lateral channels and the lower cooking cartridge.

4. The cooking appliance according to one of claims 1 to 3, **characterized in that** it comprises two reflectors (7) that at least partially cover each of the lateral faces of the cooking space (5).

5. The cooking appliance according to claim 1 or claim 2, **characterized in that** it comprises a body (9) defining a generally C-shaped cooking space comprising a rear wall and two upper (92) and lower (93) platens.

6. The cooking appliance according to claim 3, **characterized in that** the upper platen (92) has two lateral flaps (94) and **in that** the lower platen (93) has two lateral flaps (95).

7. The cooking appliance according to one of claims 1 to 4, **characterized in that** each of the cooking cartridges is enveloped by an isolating sheet (16).

8. The appliance according to one of claims 5 to 7, **characterized in that** the upper platen (92) and the lower platen (93) each have a recess in which a cooking cartridge is inserted.

9. The cooking appliance according to one of claims 1 to 8, **characterized in that** the lower cooking cartridge has a surface that protrudes past that of the upper cartridge.

10. The cooking appliance (1) according to one of claims 1 to 9, **characterized in that** the appliance has two C-shaped lateral flanges (17) whereof the two free ends have openings (19) through which the cooling flow is removed.
